# EUROPEAN PATENT APPLICATION

(11) **EP 3 640 453 A1**
(43) Date of publication of application: **22.04.2020**
(21) Application number: 19197542.4
(22) Date of filing: 16.09.2019
(51) Int. Cl.: F02C 7/232, F02C 9/26

(54) **FUEL METERING SYSTEM**

(30) Priority: 16.10.2018 GB 201816821
(71) Applicant: Rolls-Royce plc, London N1 9FX (GB)
(72) Inventor: Pye, Jonathan, Derby, Derbyshire DE24 8BJ (GB)
(74) Representative: Rolls-Royce plc

(57) **Abstract**

The invention provides a fuel metering system for a gas turbine engine, the fuel metering system comprising: a fuel supply line; a fuel metering valve configured to pass an amount of fuel received from the fuel supply line to the gas turbine engine; a spill line configured to receive excess fuel from the fuel supply line; a spill valve provided in the spill line and configured to control the flow of fuel through the spill line; an engine control unit configured to control the position of the spill valve; a sensor configured to measure the position of the spill valve; wherein the engine control unit is further configured to identify an uncommanded increase in fuel flow by comparing an expected position of the spill valve to a position of the spill valve measured by the sensor.

## Description

The present disclosure relates to fuel metering systems, such as those used in aviation gas turbine engines.

### Background

In modern aircraft, un-commanded high engine thrust (UHT) is a concern. It is desirable to rapidly detect and accommodate a UHT event. Engine shut down is a limited option and is only really an option on the ground. In-flight (and in some cases, on the ground as well), if one engine is shut down because of a UHT event, an aircraft can experience gross asymmetric thrust. Therefore, it is preferable to have a system capable of rapidly detecting a UHT threat and subsequently able to maintain and control the fuel flow to the engine, thereby controlling engine thrust.

It is an aim of the present disclosure to at least partially address the problems discussed above.

### Brief Summary

According to a first aspect of the disclosure there is provided a fuel metering system for a gas turbine engine, the fuel metering system comprising: a fuel supply line; a fuel metering valve configured to pass an amount of fuel received from the fuel supply line to the gas turbine engine; a spill line configured to receive excess fuel from the fuel supply line; a spill valve provided in the spill line and configured to control the flow of fuel through the spill line; an engine control unit configured to control the position of the spill valve; a sensor configured to measure the position of the spill valve; wherein the engine control unit is further configured to identify an uncommanded increase in fuel flow by comparing an expected position of the spill valve to a position of the spill valve measured by the sensor.

Optionally, the expected position is a virtual limit of the spill valve in the closing direction.

Optionally, the virtual limit is a function of operating parameters of the gas turbine engine.

Optionally, the engine control unit is further configured to limit closure of the spill valve in response to identifying an uncommanded increase in fuel flow.

Optionally, the fuel metering system further comprises a servo valve associated with the spill valve, and wherein the engine control unit is configured to control the position of the spill valve via the servo valve.

Optionally, the engine control unit is further configured to close the fuel metering valve in response to identifying an uncommanded increase in fuel flow.

Optionally, the fuel metering system further comprises a pump supplying fuel to the fuel supply line.

Optionally, the spill line is configured to receive the excess fuel from the fuel supply line and deliver it back to the pump.

According to a second aspect of the disclosure, there is provided a method of operating a fuel metering system for a gas turbine engine, the method comprising the steps of: supplying fuel to a gas turbine engine through a fuel supply line; diverting an excess supply of fuel from the fuel supply line to a spill line; monitoring the position of a spill valve provided in the spill line; and identifying an uncommanded increase in fuel supplied to the gas turbine engine in response to identifying that the position of the spill valve deviates from an expected position of the spill valve.

Optionally, the method comprises the further step of limiting a maximum fuel flow to the gas turbine engine in response to identifying that the position of the spill valve deviates from an expected position of the spill valve.

Optionally, the step of limiting comprises limiting the closure of the spill valve.

Optionally, the step of limiting comprises closing a fuel metering valve controlling the supply of fuel to the gas turbine engine.

Optionally, the fuel metering system is a system according to the first aspect described above.

According to a third aspect of the disclosure, there is provided a gas turbine engine for an aircraft comprising: an engine core comprising a turbine, a compressor, and a core shaft connecting the turbine to the compressor; a fan located upstream of the engine core, the fan comprising a plurality of fan blades; a gearbox that receives an input from the core shaft and outputs drive to the fan so as to drive the fan at a lower rotational speed than the core shaft; and a fuel metering system according to the first aspect of the invention described above.

Optionally, the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

The skilled person will appreciate that except where mutually exclusive, a feature or parameter described in relation to any one of the above aspects may be applied to any other aspect.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a flow diagram of a fuel pumping unit and fuel metering unit;
Figure 5 is a flow diagram of engine control loops;
Figure 6 is a flow diagram of a fuel metering system;
Figure 7 is a flow diagram of a fuel metering system; and
Figure 8 illustrates steps in a control method.

### Detailed Description

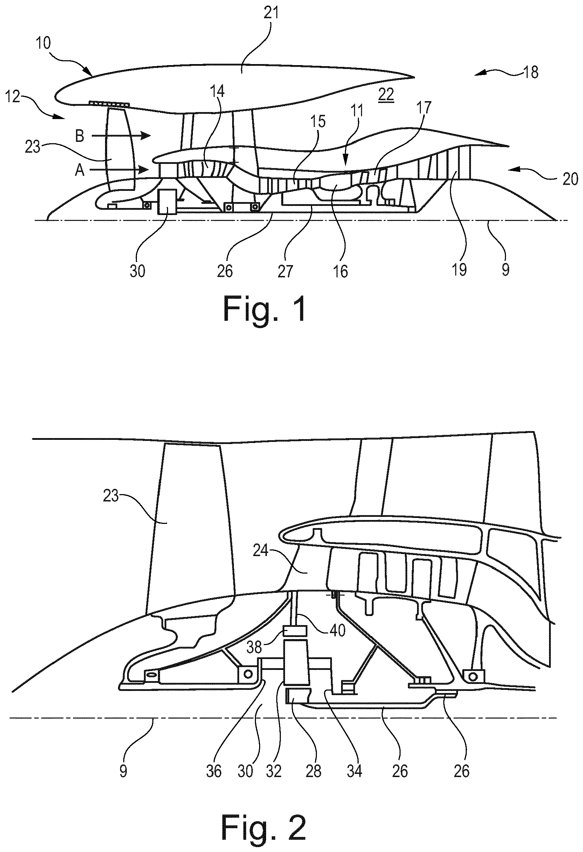

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

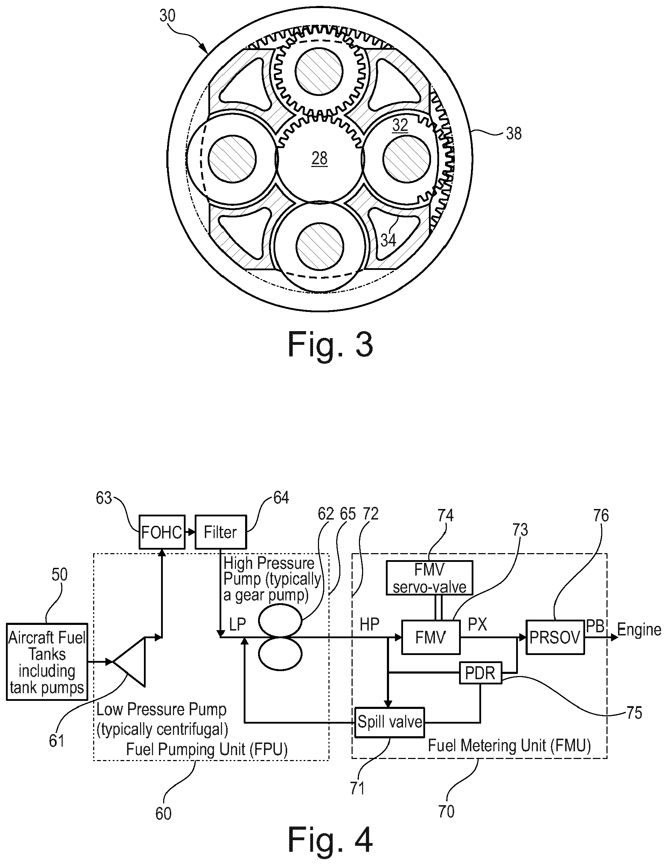

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Figure 4 shows a schematic diagram of a conventional gas turbine engine fuel control system. The system is broadly divided into a fuel pumping unit (FPU) 60 and a fuel metering unit (FMU) 70.

As shown in Figure 4, fuel from aircraft tanks 50 is pumped via engine tank pumps to the FPU 60. The FPU 60 typically comprises a low pressure (LP) pump 61 followed by a high pressure (HP) pump 62. The FPU 60 is typically mounted on the accessory gearbox (AGB) with the LP and HP pumps 61, 62 driven off the gearbox at a fixed ratio of engine shaft speed. The LP pump 61 pressurises the fuel before it passes to the downstream HP pump 62 via a fuel oil heat exchanger (FOHE) 63 and a main engine filter 64. The LP stage 61 is capable of handling the low inlet pressures and multiphase flow that will be presented to the fuel pump with failed airframe tank pumps; it is designed to generate sufficient pressure to ensure that, even with high inter-stage losses which will occur if the filter 64 and FOHE 63 are running on bypass, the HP gear stages 62 are not starved of flow. In other words the LP pump 61 helps prevent cavitation at the HP gear pump 62 inlet.

The HP pump 62 is usually a fixed displacement pump, and so it delivers a fuel flow proportional to its speed of rotation. The pump 62 is sized to deliver a flow that exceeds the burner flow requirement of the engine at all operating conditions. Any surplus flow is spilled back to HP pump 62 inlet via the spill valve (SV) 71 in the FMU 70. Total HP pump 62 delivery flow passes from the FPU outlet 65 to the FMU inlet 72.

On entering the FMU 70 the total flow from the HP pump 62 is split. The required burner flow passes through a fuel metering valve (FMV) 73, and any excess or surplus flow passing through the SV 71 back to HP pump 62 inlet, or to provide servo flow to actuation systems for engine variable geometry (such as Variable Stator Vane Actuators).

Normal fuel metering is achieved via the valves of the FMU 70 - i.e. the FMV 73 and SV 71. FMV 73 is moved via servo flow from an associated servo-valve 74 to vary the opening of a flow metering port. The pressure drop across the metering port can be controlled to a nominally constant value via a pressure drop regulator (PDR) 75 and the SV 71. The PDR 75 senses any change in the FMV 73 pressure drop and adjusts a servo orifice to vary the servo flow to the SV 71 so that the SV 71 moves to restore the FMV 73 pressure drop by adjusting the amount of excess flow from the HP pump 62 which is spilt back to pump inlet.

Thus, in normal operation, metered flow to the engine 10 is essentially a function of FMV 73 position. The FMV 73 position can be sensed by an appropriate position sensor and fed back to the electronic engine control (EEC) to facilitate so-called inner loop (i.e. fuel system level - see discussion below) control of FMV 73 position.

Downstream of the FMV 73, flow passes through a pressure raising shut off valve (PRSOV) 76 before exiting the FMU 70 and passing to the engine burners via a delivery line and burner manifold. Typically, the PRSOV 76 comprises a piston moveable within a sleeve to control the opening of a flow port that connects the FMV 73 outlet line to the downstream burner delivery line. One side of the piston is exposed to downstream metering valve pressure and the other side has a spring load acting on it and also a reference pressure set by an associated shut off valve servo-valve (SOVSV - not shown).

In normal operation, a low pressure supply is ported to the spring side of the PRSOV 76. The valve will only open against this pressure and the spring load, to allow flow to the burners, once a certain level of pressure is achieved on the upstream side, downstream of the FMV. In 'shut off' mode, the SOVSV is energised to port HP fuel to the spring side of the PRSOV 76 so that the valve closes to provide a drip tight seal, closing off fuel flow to the engine 10.

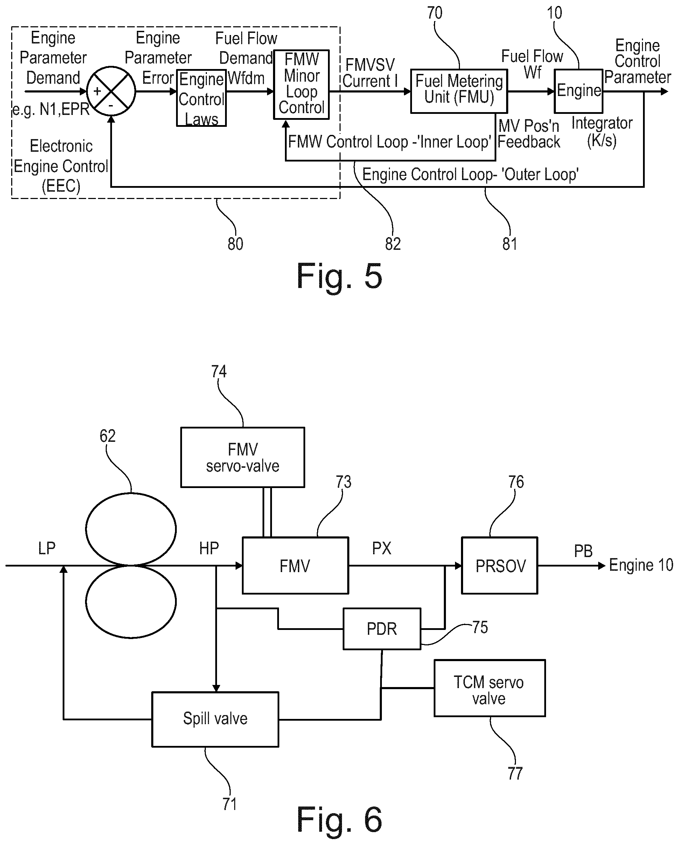

The conventional fuel control described above has limited capability for detecting or accommodating an un-commanded high engine thrust (UHT). This is explained by considering the typical fuel control loops associated with the FMU 70, which are shown schematically in Figure 5.

FMV 73 position is controlled by an EEC 80. The EEC controls a slow outer control loop 81 and a fast inner control loop 82.

The outer engine loop 81 sets a demand on an engine control parameter (for example, fan speed (N1) or engine pressure ratio (EPR)), responding to changes set by the pilot's throttle. The demanded value for the engine parameter is compared to an actual measured value and the resultant error signal is converted into a fuel flow demand by the EEC 80.

The fuel flow demand is the input to the minor or inner control loop 82. This is converted into a FMV 73 demanded position which is compared to the actual FMV 73 position, as measured by an appropriate position sensor. FMV 73 position error is used to generate a current to drive the FMV servo-valve 74 which in turn drives the FMV 73 to its demanded position as previously described. As the FMV 73 moves to its demanded position, flow to the engine 10 changes and the engine 10 responds, the engine parameter under outer loop control 81 changing to meet the outer loop 81 demand.

The inner loop 82 response (FMV 73 control) is much faster than the outer loop 81 response. This is because the latter relies on the engine 10 to respond before the engine control parameter can change.

As a result, in the event of a failure internal to the FMU 70, causing an uncommanded increase in fuel flow to the burners, this system relies on a change in the engine control parameter to detect the potential UHT threat. That means UHT threat detection is slow.

Further, the only subsequent action which can be taken is to shut down the engine via the SOVSV and PRSOV. That means options for UHT accommodation are limited. Engine shut down is a limited option and is only really applicable on the ground. In-flight (and in some cases on the ground as well), slow detection of a UHT event on one engine can lead to the aircraft experiencing gross asymmetric thrust. With limited aircraft rudder authority/response this can be hazardous, particularly at low altitude conditions such as approach to a runway.

Once detected, shut down of an engine 10 experiencing UHT can itself lead to the aircraft experiencing gross asymmetric thrust, particularly if the aircraft rudder has been adjusted in an attempt to compensate for the UHT - sudden shut down of the engine can result in asymmetric thrust caused by a combination of having one functional engine and an incorrectly positioned rudder.

Figure 6 presents a UHT protection system. In this system, normal fuel metering is achieved via the valves of the FMU 70.

As in Figure 4, FMV 73 of Figure 5 is moved via servo flow from an associated servo-valve 74 to vary the opening of a flow metering port. The pressure drop across the metering port is controlled to a nominally constant value via the PDR 75 and the SV 71. The PDR 75 senses any change in the FMV 73 pressure drop and adjusts a servo orifice to vary the servo flow to the SV 71. This causes the SV 71 to move to restore the FMV 73 pressure drop by adjusting the amount of excess flow from the HP pump 62 that is spilt back to pump inlet. Thus, in normal operation, metered flow to the engine 10 is essentially a function of FMV 73 position. That position is sensed by an appropriate position sensor and fed back to the EEC 80 to facilitate inner loop 82 (i.e. fuel system level) control of FMV 73 position.

In the event of a FMV 73 fault (e.g. upward runaway of the FMV 73 or a jammed FMV 73), an overthrust threat is detected via the engine control loop (outer loop 81) which senses a change in an engine parameter. The EEC 80 then acts to energise a thrust control malfunction (TCM) servo-valve 77 which moves to vent the SV 71 servo pressure back to HP pump 62 inlet pressure (LP). This opens the SV 71 to increase spill flow and simultaneously reduces flow through the FMV 73 to the burners. Thus the level of overfuelling/overthrust is limited.

Similarly, in the event of an overthrust threat caused by a jammed SV 71 (too far closed), this can be sensed by the outer control loop and accommodated by the EEC 80 closing the FMV 73.

In both of the above scenarios, the main drawback is the slow speed of response. The slow outer control loop 81 has to wait for a change in a key engine parameter to first detect and then accommodate a potential UHT threat. The measured engine parameter provides the feedback signal to the EEC 80 in TCM control mode. Consequently, an appreciable increase in thrust can occur before the burner flow is pulled back.

There are other ways of achieving control to avoid UHT. Many of these suffer from the same issue, their response to an upward runaway of the FMV or a jammed FMV/SV or an incorrect/lost FMV position signal being slow because of their reliance on the slow outer engine control loop 81.

Thus, the systems described above are limited in their ability to meet UHT detection and accommodation requirements on modern engines. Detection via the outer loop 81 is slow (the engine 10 can reach an unacceptable level of overthrust before action is taken) and accommodation by shutting down the engine 10 can exacerbate the UHT problem.

Therefore, it is preferable to have a system capable of rapidly detecting a UHT threat and, before it manifests to any significant extent at engine level, that is subsequently able to maintain control the fuel flow to the engine, thereby controlling engine thrust.

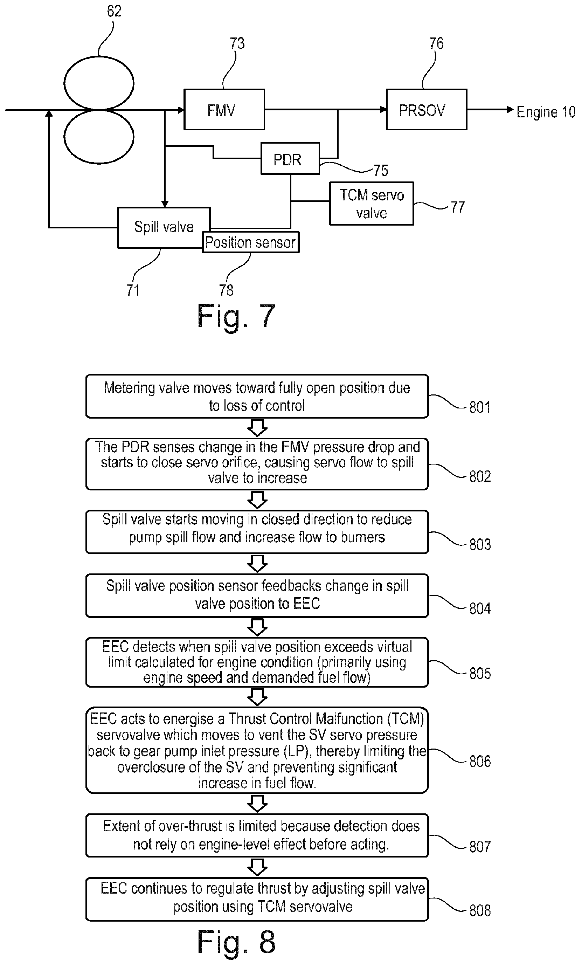

Figures 7 and 8 relate to an arrangement in which a position sensor 78 is deployed to monitor the mechanical position of the SV 71 within the FMU 70.

In Figure 7, as in Figure 6, the pressure drop across the metering port of FMV 73 can be controlled to a nominally constant value via PDR 75 and SV 71. That is, the PDR 75 can sense the FMV 73 pressure drop and adjusts a servo orifice to vary the servo flow to the SV 71, so that the SV 71 moves to adjust the amount of excess flow from the HP pump 62 which is spilt back to the pump inlet. Thus, in normal operation, metered flow to the engine 10 is essentially a function of FMV 73 position, the latter being sensed by an appropriate position sensor and fed back to the EEC 80 to facilitate inner loop 82 control of FMV 73 position.

By directly measuring the position of the SV 71 with a position sensor 78, a fault can accurately and rapidly be detected, where the actual measured position tends towards or significantly beyond a virtual limit in the closing direction. The virtual limit is a calculated value or position and can continuously vary based on the expected position of the SV 71 for the given pump 62 speed and demanded flow, as well as other parameters such as fuel temperature for example. A mismatch in measured position and the calculated expected position can arise when, for example, if FMV 73 malfunctions and causes a sudden pressure drop or through failures of the hydro-mechanical pressure drop control loop.

An example of such a mismatch is considered in Figure 8, which illustrates a fault detection and response. In step 801, a fault occurs and FMV 73 moves towards a fully open position, which is not in accordance with the demanded control. The PDR 75 senses the change in the FMV 73 pressure drop in step 802. As a result, in accordance with the normal control scheme, it starts to close the servo orifice of the PDR 75 itself, causing servo flow to SV 71 to increase. In turn, this causes SV 71 to start moving in step 803. SV 71 starts moving in a closed direction to reduce pump spill flow and thus restore pressure across FMV 73 and increase the fuel flow to burners.

However, in step 804 the SV position sensor 78 feeds back the change in spill valve position to EEC 80. At that point, in step 805, EEC 80 detects that the spill valve position exceeds (i.e. deviates from) the virtual limit calculated for the current engine condition (primarily using engine speed and demanded fuel flow, which have not changed during the FMV 73 malfunction). Therefore, in step 806, EEC 80 acts to energise TCM servo-valve 77, to vent the SV 71 servo pressure, back to gear pump inlet pressure (LP) for example, thereby limiting the overclosure of the SV and preventing significant increase in fuel flow. As a result, in step 807, the extent of over-thrust is limited because detection does not rely on engine-level effect before acting. That is, the over-thrust is detected before any evidence is manifested in the engine 10. Subsequent control of engine thrust can be achieved by the EEC 80 adjusting the SV 71 position using TCM servo-valve 77.

In other words, the position feedback signal can be used by the EEC 80 to identify a potential UHT threat. If measured position tends towards or significantly beyond a virtual limit in the closing direction, this can be detected by the fast EEC inner loop control 82, without relying on the slow outer engine control loop 81 to detect a change in an engine parameter.

In practice, the EEC 80 may apply some form of threshold when comparing the measured position of SV 71 to the virtual limit, in order to determine if a loss of control has occurred. In other words, a threshold may be set at some absolute difference compared to the virtual limit, or some percentage amount difference compared to the virtual limit, and a determination of loss of fuel flow control may be made if the measured position exceeds (in the closed direction) that threshold amount. The threshold may vary with engine condition including during engine transients.

If the SV 71 position tends towards or beyond the virtual limit (i.e. beyond the set threshold), then this indicates a loss of fuel flow control e.g. due to an uncommanded increase in fuel flow. In any case, the arrangement can act in response to an indicated loss of fuel flow control to limit the closure of the SV 71 by activating TCM servo-valve 77, which relieves the servo pressure supply to the SV 71 to low pressure (e.g. pump 62 inlet pressure), thereby preventing the SV 71 from closing significantly beyond the expected position. Preventing the SV 71 from closing to restore FMV 73 pressure drop limits the maximum flow that the system can deliver to the engine 10 combustion chamber and therefore the thrust level.

Similarly, jamming or loss of control of the SV 71 position can be detected by the EEC (by monitoring of actual vs. expected spill valve position), and mitigated by adjusting the FMV 73 position to limit over-fuelling before significant engine-level effect.

Additionally, the real-time data available from the position sensor 78 allows for additional system health monitoring of the SV 71 position in normal operation. This can be used to determine the level of deterioration of the fuel pump 62 and to detect failure or deterioration of the hydro-mechanical pressure drop control loop (such as high friction in the SV 71).

As such, the system prevents or significantly limits an un-commanded increase in fuel flow without relying on detection of this failure by looking for an engine-level (i.e. outer control loop 81) response. This also significantly limits or prevents the disturbance in thrust as a result of fuel flow control failures compared to existing solutions for thrust control malfunction accommodation that rely on detection of engine effect.

It will be understood that the invention is not limited to the embodiments above-described and various modifications and improvements can be made without deviating from the scope of the invention as defined by the appended claims.

## Claims

1. A fuel metering system for a gas turbine engine (10), the fuel metering system comprising:
a fuel supply line;
a fuel metering valve (73) configured to pass an amount of fuel received from the fuel supply line to the gas turbine engine (10);
a spill line configured to receive excess fuel from the fuel supply line;
a spill valve (71) provided in the spill line and configured to control the flow of fuel through the spill line;
an engine control unit (80) configured to control the position of the spill valve (71);
a sensor (78) configured to measure the position of the spill valve (71);
wherein the engine control unit (80) is further configured to identify an uncommanded increase in fuel by comparing an expected position of the spill valve (71) to a position of the spill valve (71) measured by the sensor (78).

2. The fuel metering system according to Claim 1, wherein the expected position is a virtual limit of the spill valve (71) in the closing direction.

3. The fuel metering system according to Claim 2, wherein the virtual limit is a function of operating parameters of the gas turbine engine (10).

4. The fuel metering system according to any one of the preceding claims, wherein the engine control unit (80) is further configured to limit closure of the spill valve (71) in response to identifying an uncommanded increase in fuel flow.

5. The fuel metering system according to any one of the preceding claims, further comprising a servo valve (77) associated with the spill valve (71), and wherein the engine control (80) unit is configured to control the position of the spill valve (71) via the servo valve (77).

6. The fuel metering system according to any one of the preceding claims, wherein the engine control unit (80) is further configured to close the fuel metering valve (73) in response to identifying an uncommanded increase in fuel flow.

7. The fuel metering system according to any one of the preceding claims, further comprising a pump (62) supplying fuel to the fuel supply line.

8. The fuel metering system according to claim 8, wherein the spill line is configured to receive the excess fuel from the fuel supply line and deliver it back to the pump (62).

9. A method of operating a fuel metering system for a gas turbine engine, the method comprising the steps of:
supplying fuel to a gas turbine engine (10) through a fuel supply line;
diverting an excess supply of fuel from the fuel supply line to a spill line;
monitoring the position of a spill valve (71) provided in the spill line; and
identifying an uncommanded increase in fuel supplied to the gas turbine engine in response to identifying that the position of the spill valve (71) deviates from an expected position of the spill valve (71).

10. The method according to Claim 9, comprising the further step of:
limiting a maximum fuel flow to the gas turbine engine in response to identifying that the position of the spill valve (71) deviates from an expected position of the spill valve (71).

11. The method according to Claim 10, wherein the step of limiting comprises limiting the closure of the spill valve (71).

12. The method according to Claim 10 or Claim 11, the step of limiting comprises closing a fuel metering valve (73) controlling the supply of fuel to the gas turbine engine (10).

13. The method according to any one of Claims 9 to 12 wherein the fuel metering system is a system according to any one of Claims 1 to 8.

14. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades;
a gearbox (30) that receives an input from the core shaft (26) and outputs drive to the fan so as to drive the fan at a lower rotational speed than the core shaft; and
a fuel metering system according to any one of Claims 1 to 8.

15. The gas turbine engine (10) according to Claim 14, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.
